# DEMANDE DE BREVET EUROPEEN

(11) **EP 4 174 878 A1**
(43) Date de publication de la demande: **03.05.2023**
(21) Numéro de dépôt: 22204789.6
(22) Date de dépôt: 31.10.2022
(51) Int. Cl.: G21F 9/28, G21D 1/00, B25J 9/00, B25J 9/04, B25J 18/02

(54) **SYSTÈME DE DÉMANTÈLEMENT POUR UNE INSTALLATION NUCLÉAIRE**

(30) Priorité: 02.11.2021 FR 2111603
(71) Demandeur: Graphitech, 69006 Lyon (FR)
(72) Inventeur: LEFEBVRE, Xavier, 30700 Uzès (FR); GAROD, David, 69430 Lantignié (FR); JAIN, Piyush, 69007 LYON (FR)
(74) Mandataire: Lavoix

(57) **Abrégé**

Ce système de démantèlement (2) pour une installation nucléaire (1) comprend une partie fixe (3) portant un mât (4) qui s'étend vers le bas, un bras robotisé (7), fixé à une extrémité basse du mât, et un outil (6), fixé au bras robotisé. Le bras robotisé est à sept degrés de liberté et comprend une couronne d'orientation (73), mobile en rotation et permettant une rotation du bras robotisé par rapport au mât, de sorte à former un des sept degrés de liberté, des membres (75, 77, 79, 81), mobiles par rapport à la couronne d'orientation et les uns par rapport aux autres, de sorte à former cinq des sept degrés de liberté, les membres comprenant un membre d'extrémité (81), et une tête rotative (83), montée sur le membre d'extrémité, portant l'outil et mobile en rotation par rapport au membre d'extrémité, de sorte à former un des sept degrés de liberté. En condition de manutention, le bras robotisé est conçu pour supporter une masse d'au moins 700 kg.

## Description

La présente invention concerne un système de démantèlement pour une installation nucléaire.

Les installations nucléaires, telles que par exemple les réacteurs Uranium Naturel Graphite Gaz (UNGG) comportent généralement une enceinte étanche comprenant du matériel radioactif, tel que du combustible nucléaire, par exemple sous forme de barres ou de briques. Ce matériel radioactif produit généralement un rayonnement ionisant important, ce qui empêche ou limite fortement la présence d'intervenants dans l'enceinte étanche. Les travaux de démantèlement de telles installations nucléaires sont donc dangereux, et il est donc courant d'utiliser des systèmes de démantèlement permettant d'effectuer de tels travaux de démantèlement sans intervention directe d'intervenants dans l'enceinte étanche. Ainsi, il est courant d'utiliser un bras robotisé pour effectuer des travaux de démantèlement, un tel bras robotisé étant contrôlé depuis l'extérieur de l'enceinte étanche.

Le document US 4 523 884 décrit un tel bras robotisé.

Cependant, il n'existe pas de système de démantèlement comprenant un bras robotisé suffisamment performant pour effectuer toutes les tâches de démantèlement requises pour démanteler entièrement les installations nucléaires, et en particulier les réacteurs UNGG, dont les briques de combustibles sont particulièrement complexes à démanteler.

C'est à ce besoin qu'entend répondre l'invention en proposant un système de démantèlement plus performant.

À cet effet, l'invention concerne un système de démantèlement pour une installation nucléaire, comprenant une partie fixe, configurée pour être reliée à l'installation nucléaire, un mât, comprenant une extrémité haute et une extrémité basse, l'extrémité haute étant portée par la partie fixe, le mât s'étendant selon un axe vertical depuis la partie fixe vers le bas, un bras robotisé, fixé à l'extrémité basse du mât, et un outil, fixé au bras robotisé. Le bras robotisé est à au moins sept degrés de liberté et comprend une couronne d'orientation, mobile en rotation par rapport au mât autour de l'axe vertical et permettant une rotation du bras robotisé par rapport au mât, de sorte à former un des sept degrés de liberté ; des membres, mobiles par rapport à la couronne d'orientation et les uns par rapport aux autres, de sorte à former cinq des sept degrés de liberté, les membres comprenant un membre d'extrémité ; et une tête rotative, montée sur le membre d'extrémité et portant l'outil, la tête rotative étant mobile en rotation par rapport au membre d'extrémité autour d'un axe de tête, de sorte à former un des sept degrés de liberté. De plus, lorsque le bras robotisé est en condition de manutention, le bras robotisé est conçu pour supporter une masse, portée par la tête rotative, d'au moins 700 kg.

Grâce à l'invention, le système de démantèlement comprend un bras robotisé proposant un nombre important de degrés de liberté, et dont les articulations sont particulièrement adaptées aux travaux de démantèlement requis dans une installation nucléaire, permettant ainsi d'améliorer la mobilité du bras robotisé et donc les performances du système de démantèlement.

Selon des aspects avantageux, mais non obligatoires de l'invention, le système de démantèlement incorpore une ou plusieurs des caractéristiques suivantes, prises isolément ou selon toutes combinaisons techniquement admissibles :
- Lesdits membres sont constitués de quatre membres, les quatre membres étant mobiles en pivotement par rapport à la couronne d'orientation et les uns par rapport aux autres, autour d'axes de pivotement respectifs qui sont orthogonaux à l'axe vertical, les quatre membres comprenant un membre télescopique, distinct du membre d'extrémité et également mobile en translation le long d'un axe de translation.
- Le bras robotisé comprend, dans l'ordre suivant, depuis le mât jusqu'à l'outil :
   ∘ un socle, fixé à l'extrémité basse du mât ;
   ∘ la couronne d'orientation, mobile en rotation par rapport au socle autour de l'axe vertical ;
   ∘ parmi les quatre membres, un membre prolongateur, mobile en pivotement par rapport à la couronne d'orientation autour d'un premier des axes de pivotement ;
   ∘ parmi les quatre membres, un membre principal, mobile en pivotement par rapport au membre prolongateur autour d'un deuxième des axes de pivotement ;
   ∘ le membre télescopique, mobile en pivotement par rapport au membre principal autour d'un troisième des axes de pivotement et mobile en translation le long de l'axe de translation ;
   ∘ le membre d'extrémité, mobile en pivotement par rapport au membre télescopique autour d'un quatrième des axes de pivotement ; et
   ∘ la tête rotative, mobile en rotation par rapport au membre d'extrémité autour de l'axe de tête.
- Les quatre membres sont actionnés en pivotement par des vérins hydrauliques linéaires à double effet et le membre télescopique est actionné en translation par un vérin hydraulique linéaire à double effet.
- Le mât est configuré pour s'étendre au travers d'une ouverture ménagée dans une enceinte étanche de l'installation nucléaire, le bras robotisé est configuré pour être situé dans un volume intérieur de l'enceinte étanche, et les vérins hydrauliques linéaires à double effet sont alimentés en huile par une centrale hydraulique déportée du bras robotisé et configurée pour être située à l'extérieur de l'enceinte étanche.
- La tête rotative est actionnée en rotation par un vérin hydraulique rotatif à double effet et le vérin hydraulique rotatif à double effet est alimenté en huile par la centrale hydraulique.
- Chacun des membres et la tête rotative embarquent des capteurs configurés pour détecter la position du bras robotisé en temps réel, et configurés pour éviter une éventuelle collision du bras robotisé avec son environnement, et le système de démantèlement comprend des cartes électroniques configurées pour analyser les données provenant des capteurs et déportées du bras robotisé, les cartes électroniques étant configurées pour être situées à l'extérieur de l'enceinte étanche.
- Le membre télescopique comprend une partie intérieure et une partie extérieure, la partie extérieure étant configurée pour coulisser autour de la partie intérieure, et, lors de la translation du membre télescopique, la partie intérieure est fixe en translation le long de l'axe de translation par rapport au mât et la partie extérieure est mobile en translation le long de l'axe de translation par rapport au mât.
- La couronne d'orientation a un débattement illimité autour de l'axe vertical et la tête rotative a un débattement supérieur ou égal à 180° autour de l'axe de tête.
- La couronne d'orientation comprend une roue dentée, le bras robotisé comprend un actionneur, fixe par rapport au mât, l'actionneur comprenant un élément d'engrainement configuré pour coopérer avec la roue dentée pour entraîner la rotation de la couronne d'orientation, et, de préférence, l'élément d'engrainement est un pignon ou une vis sans fin.
- Un encombrement vertical du bras robotisé dans une configuration dépliée est supérieur ou égal à deux fois un encombrement vertical du bras robotisé dans une configuration repliée, et un encombrement horizontal du bras robotisé dans une configuration d'extension est supérieur ou égal à deux fois un encombrement horizontal du bras robotisé dans la configuration repliée.
- Lorsque le bras robotisé est en configuration repliée, le membre prolongateur, le membre principal et le membre télescopique sont repliés les uns vers les autres de sorte à former un « Z », et le membre télescopique est rétracté.
- La partie fixe comprend un cylindre de guidage configuré pour centrer le mât par rapport à la partie fixe, le cylindre de guidage étant de forme cylindrique et centré sur l'axe vertical, et, lorsque le bras robotisé est dans la configuration repliée, l'encombrement horizontal du bras robotisé est inférieur à la moitié d'un diamètre intérieur du cylindre de guidage.
- Le bras robotisé est à au moins huit degrés de liberté.
- Le huitième degré de liberté du bras robotisé est obtenu par un membres parmi les quatre membres, qui est en outre mobile en rotation autour d'un axe de décalage orthogonal aux axes de pivotement des quatre membres, ou par un membre supplémentaire, mobile en rotation par rapport aux quatre membres, autour d'un axe de décalage orthogonal aux axes de pivotement des quatre membres.

L'invention sera mieux comprise et d'autres avantages de celle-ci apparaitront plus clairement à la lumière de la description qui va suivre d'un mode de réalisation d'un système de démantèlement donnée uniquement à titre d'exemple et faite en référence aux dessins dans lesquels :
[Fig. 1] La figure 1 est une vue de côté d'une installation nucléaire comprenant un système de démantèlement conforme à un premier mode de réalisation de l'invention, sur laquelle certains éléments sont représentés en coupe ;
[Fig. 2] La figure 2 est une vue en perspective d'un bras robotisé appartenant au système de démantèlement de la figure 1, représenté dans une configuration repliée ;
[Fig. 3] La figure 3 est une vue en perspective du bras robotisé de la figure 2, selon un autre angle ;
[Fig. 4] La figure 4 est une vue de côté du bras robotisé des figures 2 et 3 ;
[Fig. 5] La figure 5 est une vue de dessus du bras robotisé des figures 2 à 4 ;
[Fig. 6] La figure 6 est une vue de côté du bras robotisé des figures 2 à 5, représenté dans une configuration dépliée ;
[Fig. 7] La figure 7 est une vue de côté du bras robotisé de la figure 6, selon un autre angle ;
[Fig. 8] La figure 8 est une coupe du bras robotisé des figures 6 et 7, selon le plan VIII de la figure 7 ;
[Fig. 9] La figure 9 est une vue de côté du bras robotisé des figures 2 à 8, représenté dans une configuration d'extension ;
[Fig. 10] La figure 10 est une vue en perspective d'une partie d'un bras robotisé appartenant à un système de démantèlement conforme à un deuxième mode de réalisation ; et
[Fig. 11] La figure 11 est une vue de côté d'une partie d'un bras robotisé appartenant à un système de démantèlement conforme à un troisième mode de réalisation.

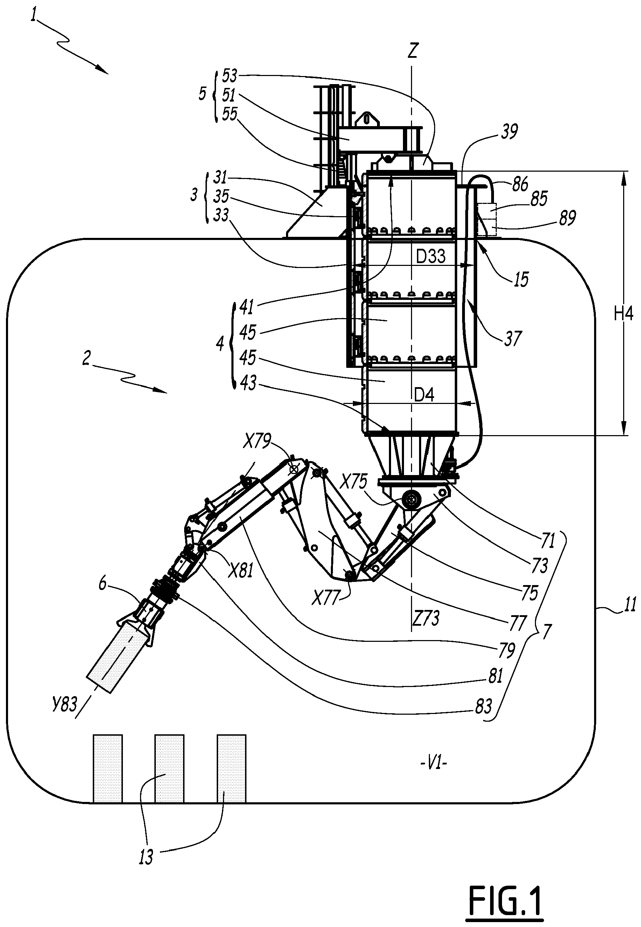

Une installation nucléaire 1 est représentée à la figure 1 de manière simplifiée. L'installation nucléaire 1 comprend une enceinte 11 qui délimite un volume intérieur V1 de manière étanche. L'enceinte 11 est par exemple l'enceinte d'un réacteur nucléaire, ou un caisson de confinement. Dans l'exemple, l'enceinte étanche 11 est l'enceinte protégeant le cœur du réacteur d'une centrale nucléaire à Uranium Naturel Graphite Gaz (UNGG). Ainsi, dans l'exemple, plusieurs empilements 13 de briques de graphite sont disposés dans le volume intérieur V1 de l'enceinte 11, la plupart des briques de graphite étant percée d'un conduit central pouvant accueillir une cartouche de combustible ou une barre de contrôle. Le volume intérieur V1 de l'enceinte 11 est donc soumis à une activité radioactive importante, sous la forme de rayonnements ionisants et sous la forme de contaminations, comme par exemple des poussières et des matériaux radioactifs.

Un système de démantèlement 2 est également représenté à la figure 1. Le système de démantèlement 2 est utilisé à l'intérieur de l'installation nucléaire 1 lorsqu'une intervention, notamment de démantèlement, est réalisée.

À la figure 1, l'installation nucléaire 1 et une partie du système de démantèlement 2 sont représentés en coupe selon un plan comprenant un axe vertical Z.

Dans la suite de la description, les termes « haut », « bas », « supérieur », « inférieur », « monter » et « descendre » se comprennent en faisant référence à l'axe vertical Z. De plus, l'orientation « horizontale » fait référence à une orientation orthogonale à l'axe vertical Z.

De plus, dans la suite de la description, on entend que deux axes orthogonaux sont deux axes étant chacun perpendiculaire à un troisième axe. Ainsi, deux axes orthogonaux ne sont pas nécessairement sécants. Deux axes orthogonaux et sécants sont perpendiculaires.

Dans l'exemple, le système de démantèlement 2 permet de manipuler les briques de graphite de sorte à les évacuer des empilements 13. Pour cela, le système de démantèlement 2 comprend une partie fixe 3, un mât 4, un système de manutention 5, un outil 6 adapté pour manipuler les briques de graphite et un bras robotisé 7, fixé au mât 4 et portant l'outil 6. La partie fixe, le mât et le système de manutention sont représentés en coupe sur la figure 1, alors que le bras robotisé et l'outil sont représentés en vue de côté.

Le système de démantèlement 2 repose sur l'enceinte 11 de l'installation nucléaire 1, par l'intermédiaire de sa partie fixe 3. Avantageusement, la partie fixe 3 comprend une base 31 et un cylindre de guidage 33 qui s'étend selon l'axe vertical Z au travers d'une ouverture 15 ménagée dans l'enceinte 11 et débouchant dans le volume intérieur V1. De préférence, l'ouverture 15 est circulaire. La base 31 est donc située à l'extérieur de l'enceinte 11, c'est-à-dire en dehors du volume intérieur V1.

La partie fixe 3 porte le mât 4, qui s'étend vers le bas, c'est-à-dire vers l'intérieur de l'enceinte 11. Le mât 4 est sensiblement vertical, et s'étend donc selon l'axe vertical Z, qui est un axe principal du système de démantèlement 2. Le mât 4 comprend ainsi une extrémité haute 41 et une extrémité basse 43, et le mât est porté par la partie fixe 3 au niveau de son extrémité haute 41. En pratique, le mât 4 s'étend au-travers de l'ouverture 15. Avantageusement, le mât 4 est formé de plusieurs modules 45, juxtaposés selon l'axe vertical Z, et assemblés entre eux, par exemple par bridage. Dans l'exemple de la figure 1, le mât 4 comprend quatre modules 45. Par ailleurs, le cylindre de guidage 33 comprend des patins de guidage 35, qui sont en contact avec les modules 45 de sorte à centrer le mât 4 dans le cylindre de guidage. Dans l'exemple, le cylindre de guidage comprend neuf patins de guidage 35, répartis en trois groupes de trois patins de guidage, les trois patins de guidage de chaque groupe étant répartis le long du cylindre de guidage selon l'axe vertical Z et les trois groupes étant régulièrement répartis tout autour du cylindre de guidage.

Le système de manutention 5, disposé entièrement en dehors de l'enceinte 11, permet de faire monter et de faire descendre le mât 4 par rapport à la partie fixe 3. Pour cela, le système de manutention 5 comprend un palonnier 51, relié à des moyens de levage non-représentés, tels que par exemple une grue ou un pont roulant. Le palonnier 51 est donc mobile à l'extérieur de l'enceinte 11 à l'aide des moyens de levage. En outre, le palonnier 51 est apte à être relié à l'extrémité haute 41 du mât 4, par l'intermédiaire d'une bride de manutention 53. La bride de manutention 53 peut également être séparée du mât 4, pour dissocier le mouvement du palonnier du mouvement du mât. Avantageusement, le système de manutention 5 comprend également des actionneurs 55, par exemple des vérins, sur lesquels reposent le palonnier 51, et qui permettent de déplacer le palonnier entre une position haute et une position basse. On définit également une position haute et une position basse du mât 4, qui est mobile en translation selon l'axe Z dans le cylindre de guidage 33, c'est-à-dire à l'intérieur du cylindre de guidage. Lorsque le palonnier est relié au mât 4 et en position haute, alors le mât est en position haute. De même, lorsque le palonnier est relié au mât 4 et en position basse, alors le mât est en position basse.

Dans l'exemple, le cylindre de guidage 33 et le mât 4 sont des cylindres circulaires droits. Le cylindre de guidage a un diamètre intérieur, noté « D33 », compris entre 200 mm et 3000 mm, de préférence égal à 2400 mm. Le mât 4 a un diamètre extérieur, noté « D4 », compris entre 1300 mm et 2300 mm, de préférence égal à 1700 mm.

Le système de démantèlement 2 présente donc un espace annulaire 37, formé entre le cylindre de guidage 33 et le mât 4. En pratique, les patins de guidage 35 sont disposés dans l'espace annulaire 37. Par ailleurs, pour conserver l'étanchéité de l'enceinte 11, le système de démantèlement 2 comprend avantageusement un bouchon 39, qui ferme l'espace annulaire 37.

Le mât 4 est modulaire, c'est-à-dire qu'il est possible de faire varier le nombre de modules 45 que le mât comprend. Ainsi, il est possible, à l'aide du système de manutention 5, d'ajouter ou de retirer des modules 45 au mât 4. Par exemple, pour ajouter un module, le mât est descendu en position basse, puis un module supplémentaire est fixé à l'extrémité haute 41 du mât. Pour retirer un module, le mât est monté en position haute, puis le module le plus haut du mât est séparé du mât et évacué.

Grâce à l'aspect modulaire du mât 4 et au système de manutention 5, il est possible de modifier la hauteur du mât 4, notée « H4 », et ainsi la position de l'extrémité basse 43 du mât à l'intérieur du volume V1 de l'enceinte 11. Dans l'exemple, les modules 45 ont une hauteur d'environ 1200 mm, et le mât 4 peut comprendre entre 3 et 15 modules. Ainsi, dans l'exemple, la hauteur H4 du mât peut varier entre 3600 mm et 18000 mm.

L'outil 6 est porté par le bras robotisé 7, lui-même fixé à l'extrémité basse 43 du mât 4. Ainsi, le bras robotisé 7 permet de mouvoir et d'orienter l'outil 6 au sein du volume V1, afin que l'outil puisse effectuer des opérations nécessaires au démantèlement de l'installation nucléaire 1. Autrement dit, l'outil 6 est positionnable à l'aide du bras robotisé 7, qui lui sert de support mobile. Ainsi, le bras robotisé 7 et l'outil 6 sont entièrement disposés dans le volume V1, lorsque le système de démantèlement 2 est mis en place dans l'installation nucléaire 1.

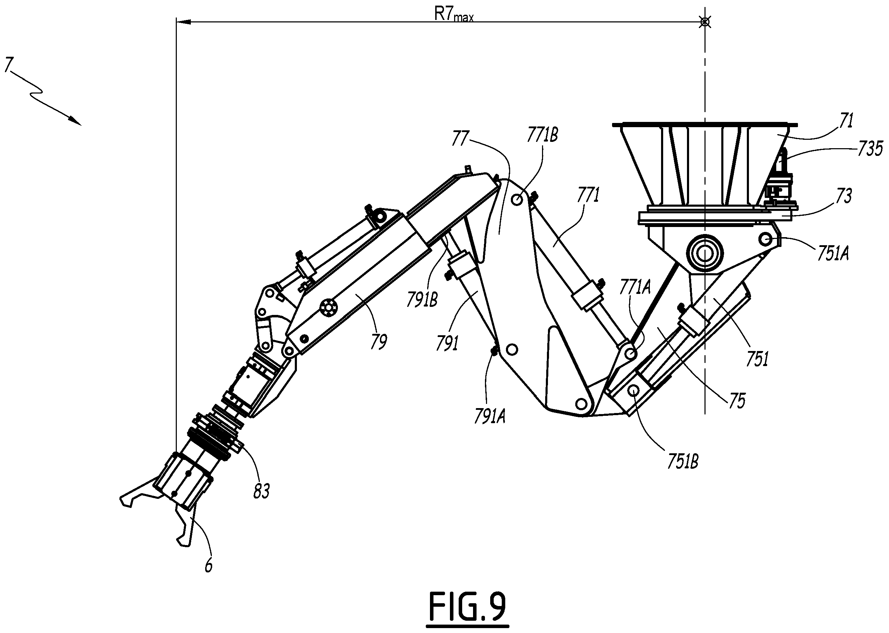

L'outil 6 est par exemple adapté pour manipuler les briques des empilements 13. L'outil 6 est représenté uniquement aux figures 1 et 9. L'outil 6 est par exemple une pince de préhension.

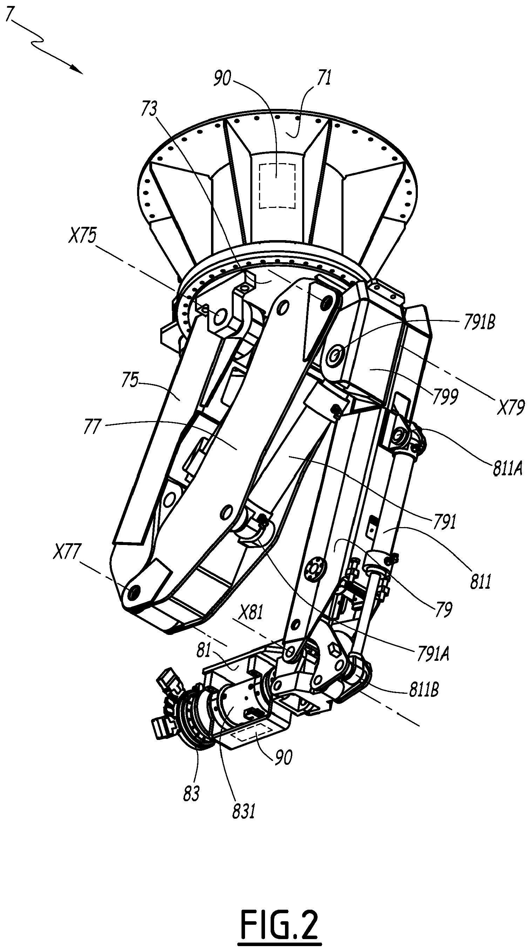

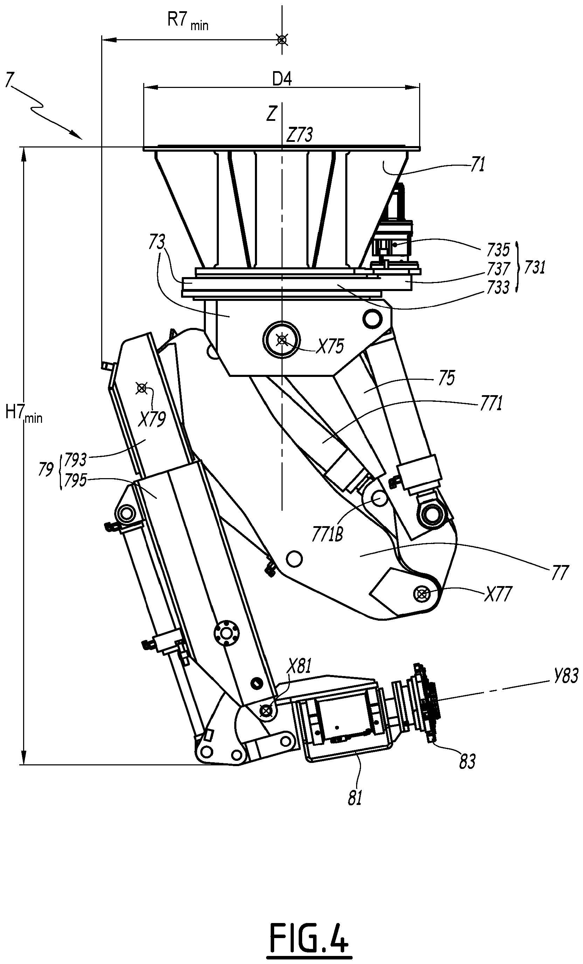

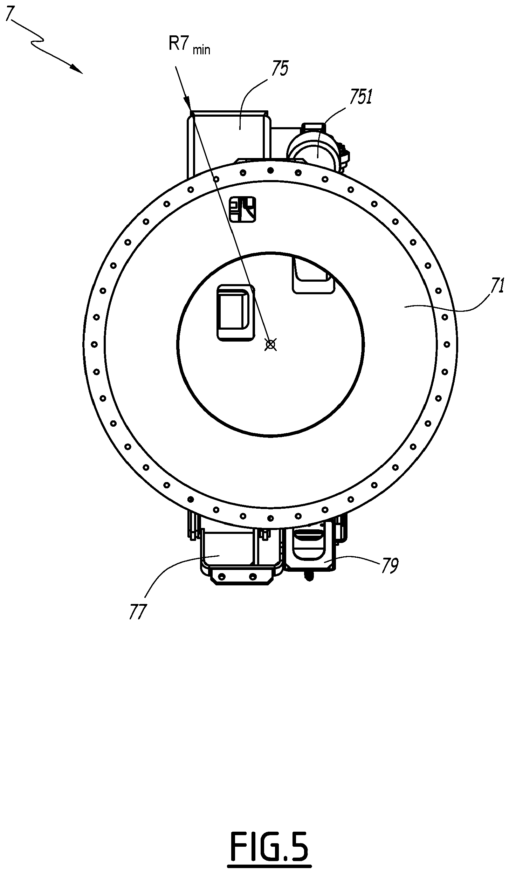

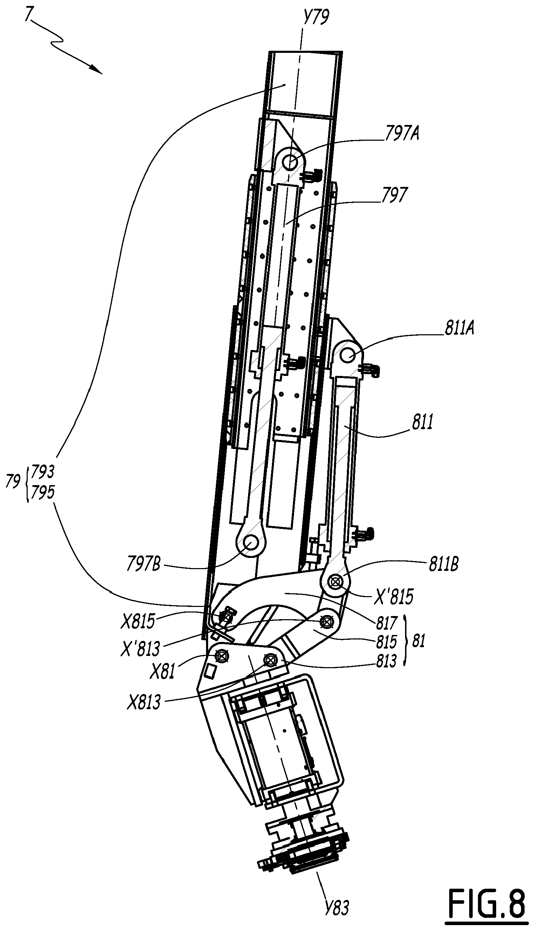

Le bras robotisé 7 est représenté plus en détail aux figures 2 à 9. Le bras robotisé est un bras poly-articulé à sept degrés de libertés, c'est-à-dire un robot multiaxe, ce qui permet donc de positionner l'outil 6 selon toute configuration souhaitée au sein du volume V1 de l'enceinte 11.

Le bras robotisé 7 comprend, dans l'ordre suivant et depuis l'extrémité basse 43 du mât 4 jusqu'à l'outil 6, un socle 71, une couronne d'orientation 73, un membre prolongateur 75, un membre principal 77, un membre télescopique 79, un membre d'extrémité 81 et une tête rotative 83.

Le bras robotisé 7 est supporté par le socle 71, qui est fixé à l'extrémité basse 43 du mât 4. Avantageusement, le socle 71 est fixé en bas du module 45 le plus bas du mât, par exemple par bridage. Le socle 71 supporte l'outil 6, via la couronne d'orientation 73, les membres 75, 77, 79 et 81 et la tête rotative 83, cette dernière formant l'extrémité du bras robotisé. Dans l'exemple, le socle est une pièce cylindrique mécanosoudée présentant une bride d'assemblage prévue pour être vissée à l'extrémité basse 43 du mât 4 et dont le diamètre est égal au diamètre D4.

La couronne d'orientation 73 est supportée par le socle 71, en étant articulée de façon motorisée par rapport au socle 71 via un système d'entraînement 731, pivotant ici en lacet. En d'autres termes, la couronne d'orientation 73 est mobile en rotation par rapport au socle 71 autour d'un axe vertical Z73, qui est avantageusement confondu avec l'axe vertical Z, en étant entraînée par le système d'entraînement 731. La couronne d'orientation 73 permet donc une rotation de l'ensemble du bras robotisé 7, socle 71 mis à part, par rapport au mât 4. La rotation de la couronne d'orientation 73 par rapport au socle 71 forme un premier degré de liberté du bras robotisé 7.

Dans l'exemple des figures, le système d'entraînement 731 comprend une roue dentée 733, fixe par rapport à la couronne d'orientation 73 et qui entoure la couronne d'orientation, et un actionneur 735, fixé sur le socle 71. L'actionneur 735 comprend un élément d'engrainement 737, qui est prévu pour coopérer avec la roue dentée 733 pour entraîner la rotation de la roue dentée. Dans l'exemple, l'élément d'engrainement 737 est un pignon dont la rotation est commandée par l'actionneur 735. Dans l'exemple, l'actionneur 735 est un moteur, comme par exemple un moteur hydraulique ou un moteur électrique. En variante, l'actionneur 735 est un vérin hydraulique rotatif. En variante, l'actionneur 735 est fixé et intégré à une partie fixe de la couronne d'orientation 73, plutôt que d'être fixé au socle 71.

Avantageusement, le système d'entraînement 731 permet une rotation illimitée, c'est-à-dire un débattement illimité, de la couronne d'orientation 73 par rapport au socle 71 autour de l'axe Z73. En pratique, la roue dentée 733 ne comprend pas de butée. Ainsi, la rotation du bras robotisé 7 par rapport au mât 4 autour de l'axe Z73 n'est pas limitée par la couronne d'orientation 73.

Le membre prolongateur 75 est supporté par la couronne d'orientation 73, en étant articulé en rotation par rapport à la couronne d'orientation autour d'un axe de pivotement X75, pivotant en tangage. L'axe de pivotement X75 est orthogonal aux axes Z et Z73, en étant ici sécant avec eux. Le pivotement du membre prolongateur 75 par rapport à la couronne d'orientation 73 forme un deuxième degré de liberté du bras robotisé 7.

Le pivotement du membre prolongateur 75 est actionné par un actionneur linéaire 751, dont une première extrémité 751A est fixée à couronne d'orientation 73 et dont une deuxième extrémité 751B est fixée au membre prolongateur. L'actionneur 751 est, dans l'exemple, un vérin hydraulique linéaire à double effet. Le déplacement du vérin 751 entraîne le pivotement, c'est-à-dire la rotation, du membre prolongateur 75 par rapport à la couronne d'orientation 73 autour de l'axe de pivotement X75.

Par commodité, on appelle « L751 » la course du vérin 751, c'est-à-dire la différence entre la longueur maximale entre les extrémités 751A et 751B lorsque le vérin est complètement déployé et la longueur minimale entre les extrémités 751A et 751B lorsque le vérin est complètement rétracté. On appelle « α75 » le débattement angulaire du membre prolongateur 75, c'est-à-dire la différence entre la position angulaire du membre prolongateur 75 par rapport à la couronne d'orientation 73 lorsque le vérin 751 est complètement rétracté, et la position angulaire du membre prolongateur par rapport à la couronne d'orientation lorsque le vérin est complètement déployé.

Le membre principal 77 est supporté par le membre prolongateur 75, en étant articulé en rotation par rapport au membre prolongateur autour d'un axe de pivotement X77, pivotant en tangage. L'axe de pivotement X77 est parallèle à l'axe de pivotement X75 et orthogonal aux axes Z et Z73. Le pivotement du membre principal 77 par rapport au membre prolongateur 75 forme un troisième degré de liberté du bras robotisé 7.

Le pivotement du membre principal 77 est actionné par un actionneur linéaire 771, dont une première extrémité 771A est fixée au membre prolongateur 75 et dont une deuxième extrémité 771B est fixée au membre principal. L'actionneur 771 est, dans l'exemple, un vérin hydraulique linéaire à double effet. Le déplacement du vérin 771 entraîne le pivotement, c'est-à-dire la rotation, du membre principal 77 par rapport au membre prolongateur 75 autour de l'axe de pivotement X77.

On appelle « L771 » la course du vérin 771, c'est-à-dire la différence entre la longueur maximale entre les extrémités 771A et 771B lorsque le vérin est complètement déployé et la longueur minimale entre les extrémités 771A et 771B lorsque le vérin est complètement rétracté. On appelle « a77 » le débattement angulaire du membre principal 77, c'est-à-dire la différence entre la position angulaire du membre principal 77 par rapport au membre prolongateur 75 lorsque le vérin 771 est complètement rétracté, et la position angulaire du membre principal par rapport au membre prolongateur lorsque le vérin est complètement déployé.

Le membre télescopique 79 est supporté par le membre principal 77, en étant articulé en rotation par rapport au membre principal autour d'un axe de pivotement X79, pivotant en tangage. L'axe de pivotement X79 est parallèle aux axes de pivotement X75 et X77 et orthogonal aux axes Z et Z73. Le pivotement du membre télescopique 79 par rapport au membre principal 77 forme un quatrième degré de liberté du bras robotisé 7.

Le pivotement du membre télescopique 79 est actionné par un actionneur linéaire 791, dont une première extrémité 791A est fixée au membre principal 77 et dont une deuxième extrémité 791B est fixée au membre télescopique. L'actionneur 791 est, dans l'exemple, un vérin hydraulique linéaire à double effet. Le déplacement du vérin 791 entraîne le pivotement, c'est-à-dire la rotation, du membre télescopique 79 par rapport au membre principal 77 autour de l'axe de pivotement X79.

On appelle « L791 » la course du vérin 791, c'est-à-dire la différence entre la longueur maximale entre les extrémités 791A et 791B lorsque le vérin est complètement déployé et la longueur minimale entre les extrémités 791A et 791B lorsque le vérin est complètement rétracté. On appelle « a79 » le débattement angulaire du membre télescopique 79, c'est-à-dire la différence entre la position angulaire du membre télescopique 79 par rapport au membre principal 77 lorsque le vérin 791 est complètement rétracté, et la position angulaire du membre télescopique par rapport au membre principal lorsque le vérin est complètement déployé.

Le membre télescopique 79 comprend en outre une partie intérieure 793 et une partie extérieure 795, mobiles en translation l'une par rapport à l'autre dans un mouvement d'éloignement-rapprochement, c'est-dire dans un mouvement de coulissement de la partie extérieure 795 autour de la partie intérieure 793. Ainsi, le membre télescopique 79 peut être rétracté ou étendu. La translation du membre télescopique 79 forme un cinquième degré de liberté du bras robotisé 7.

Le membre télescopique comprend un actionneur linéaire 797, dont une première extrémité 797A est fixée à la partie intérieure 793 et dont une deuxième extrémité 797B est fixée à la partie extérieure 795. L'actionneur 797 est, dans l'exemple, un vérin hydraulique linéaire à double effet. Le déplacement du vérin 797 entraîne la translation du membre télescopique 79 dans la direction du membre télescopique, c'est-à-dire selon un axe télescopique Y79 correspondant l'axe selon lequel le membre télescopique s'étend. On appelle « L797 » la course du vérin 797, c'est-à-dire la différence entre la longueur maximale entre les extrémités 797A et 797B lorsque le vérin est complètement déployé et la longueur minimale entre les extrémités 797A et 797B lorsque le vérin est complètement rétracté.

En pratique, la partie intérieure 793 est fixée au membre principal 77. Lors de la translation du membre télescopique, la partie intérieure 793 est donc fixe en translation le long de l'axe télescopique Y79, et la partie extérieure 795 est mobile en translation le long de l'axe télescopique Y79. En d'autres termes, lors de la translation du membre télescopique et lorsqu'aucune autre partie du bras robotisé 7 n'est actionnée, la partie intérieure 793 est fixe par rapport au mât 4 et par rapport à l'installation nucléaire 1, et la partie extérieure 795 est mobile par rapport au mât et par rapport à l'installation nucléaire. Ainsi, la deuxième extrémité 791B du vérin 791 est fixée à la partie intérieure 793 du membre télescopique 79. Plus précisément, la deuxième extrémité 791B du vérin 791 est fixée à la base de la partie intérieure 793, de sorte à ne pas bloquer la translation de la partie extérieure 795, c'est-à-dire à ne pas empêcher le mouvement de rétractation du membre télescopique 79.

Le membre d'extrémité 81 est supporté par le membre télescopique 79, en étant articulé en rotation par rapport au membre télescopique autour d'un axe de pivotement X81, pivotant en tangage. L'axe de pivotement X81 est parallèle aux axes de pivotement X75, X77 et X79 et orthogonal aux axes Z et Z73. Le pivotement du membre d'extrémité 81 par rapport au membre télescopique 79 forme un sixième degré de liberté du bras robotisé 7.

Le pivotement du membre d'extrémité 81 est actionné par un actionneur linéaire 811, dont une première extrémité 811A est fixée au membre télescopique 79, plus précisément à la partie extérieure 795 du membre télescopique, et dont une deuxième extrémité 811B est fixée au membre d'extrémité. L'actionneur 811 est, dans l'exemple, un vérin hydraulique linéaire à double effet. Le déplacement du vérin 811 entraîne le pivotement, c'est-à-dire la rotation, du membre d'extrémité 81 par rapport au membre télescopique 79 autour de l'axe de pivotement X81.

On appelle « L811 » la course du vérin 811, c'est-à-dire la différence entre la longueur maximale entre les extrémités 811A et 811B lorsque le vérin est complètement déployé et la longueur minimale entre les extrémités 811A et 811B lorsque le vérin est complètement rétracté. On appelle « α81 » le débattement angulaire du membre d'extrémité 81, c'est-à-dire la différence entre la position angulaire du membre d'extrémité 81 par rapport au membre télescopique 79 lorsque le vérin 811 est complètement rétracté, et la position angulaire du membre d'extrémité par rapport au membre télescopique lorsque le vérin est complètement déployé.

Avantageusement, le membre d'extrémité 81 comprend une portion d'extrémité 813, une première bielle 815 et une deuxième bielle 817. La portion d'extrémité 813 est articulée en pivotement par rapport au membre télescopique 79 autour de l'axe de pivotement X81. La première bielle 815 est articulée en pivotement d'une part par rapport à la portion d'extrémité 813, autour d'un axe de pivotement X813, et d'autre part par rapport à la deuxième bielle 815, autour d'un axe de pivotement X'813. La deuxième bielle 817 est en outre articulée en pivotement par rapport au membre télescopique 79, autour d'un axe de pivotement X815, et articulée en pivotement par rapport à la deuxième extrémité 811B du vérin hydraulique 811, autour d'un axe de pivotement X'815. La portion d'extrémité 813, la première bielle 815 et la deuxième bielle 817 forment ensemble un système articulé ayant pour avantage d'amplifier le pivotement du membre d'extrémité par rapport au membre télescopique lorsque le vérin 811 est actionné. Ainsi, pour une même course L811 du vérin 811, le débattement angulaire a81 du membre d'extrémité 81 est augmenté, en comparaison à un bras robotisé dans lequel le membre d'extrémité ne comprendrait pas de bielles et dans lequel la deuxième extrémité 811B du vérin 811 serait reliée à la portion d'extrémité 813.

Il est en outre particulièrement avantageux que la partie intérieure 793 du membre télescopique 79 soit fixée au membre principal 77, que la partie extérieure 795 du membre télescopique soit mobile et que la première extrémité 811A du vérin 811 soit fixée à la partie extérieure, à rencontre des préjugés du domaine selon lesquels la partie extérieure d'un membre télescopique est fixe et la partie intérieure d'un membre télescopique est mobile, car cela permet au vérin 811 d'avoir une longueur suffisante pour que sa course L811 permette au membre d'extrémité 81 d'avoir une bonne mobilité, c'est-à-dire un débattement a81 important.

En effet, si les parties 793 et 795 étaient inversées, c'est-à-dire si la partie extérieure 795 était fixée au membre principal 77 et que la partie intérieure 793 était mobile, comme l'enseignent les connaissances générales de montage des bras télescopiques, alors le vérin 811 devrait être raccourci, pour pouvoir être fixé à l'extrémité de la partie intérieure 793 restant accessible lorsque la partie intérieure est rétractée dans la partie extérieure. La course L811 serait alors réduite, ce qui réduirait également le débattement a81 du membre d'extrémité 81. Pour ne pas raccourcir le vérin 811, il serait également possible de prolonger la partie intérieure 793, de sorte à ce qu'une portion plus importante de la partie intérieure reste accessible lorsque la partie intérieure est rétractée dans la partie extérieure, mais une telle approche conduirait à augmenter sensiblement l'encombrement du membre télescopique 79, et donc du bras robotisé 7.

La tête rotative 83, sur laquelle l'outil 6 est fixé, est supportée par le membre d'extrémité 81, en étant articulée en rotation par rapport au membre d'extrémité, pivotant ici en roulis. En d'autres termes, la tête rotative 83 et l'outil 6 sont mobiles en rotation par rapport au membre d'extrémité 81 autour d'un axe de tête Y83 orthogonal avec l'axe de pivotement X81. La rotation de la tête rotative par rapport au membre d'extrémité 81 forme un septième degré de liberté du bras robotisé 7.

La rotation de la tête rotative 83 est actionnée par un actionneur rotatif 831, disposé dans le membre d'extrémité 81. L'actionneur 831 est, dans l'exemple, un vérin hydraulique rotatif. La rotation du vérin 831 entraîne la rotation de la tête rotative 83 par rapport au membre d'extrémité 81 autour de l'axe de rotation Y83. De préférence, le vérin 831 est un vérin à pignon-crémaillère, dans lequel la translation d'un piston entraîne la translation d'une crémaillère, qui entraîne la rotation d'un pignon. En variante, le vérin 831 est un autre type de vérin rotatif, comme par exemple un vérin hélicoïdal.

Avantageusement, le vérin rotatif 831 permet une rotation, c'est-à-dire un débattement, de la tête rotative 83 par rapport au membre d'extrémité 81 autour de l'axe de tête Y83 supérieure ou égale à 180°, de préférence égale à 360°. Ainsi, l'outil 6 porté par la tête rotative 83 peut prendre toutes les orientations requises pour effectuer des opérations de démantèlement. En variante, le débattement du vérin rotatif 831 est plus faible, par exemple 90°, ce qui permet d'alléger le vérin 831, de sorte à améliorer la compacité du bras robotisé 7.

De préférence, la tête rotative 83 comprend un changeur d'outils qui permet de changer l'outil 6 fixé au bras robotisé 7, en choisissant parmi un groupe d'outils disponibles. Ainsi, au cours des opérations de démantèlement de l'installation nucléaire 1, il est simple d'adapter les tâches réalisées par le système de démantèlement 2, en changeant l'outil fixé au bras robotisé en fonction des besoins.

Les vérins 751, 771, 791, 797, 811 et 831 et éventuellement le moteur 735, sont alimentés en huile par une centrale hydraulique 85. Avantageusement, la centrale hydraulique est déportée du bras robotisé 7 de sorte à être située à l'extérieur de l'enceinte étanche. Dans l'exemple, la centrale hydraulique 85 est fixée à la partie fixe 3 du système de démantèlement 2. De plus, les vérins et éventuellement le moteur sont reliés à la centrale hydraulique 85 par des flexibles 86, qui s'étendent depuis l'extérieur de l'enceinte 11 jusqu'au volume V1 en passant dans l'espace annulaire 37 formé entre le mât 4 et le cylindre de guidage 3. Sur la figure 1, la centrale hydraulique 85 est représentée de manière simplifiée, et un seul flexible 86, reliant le moteur 735 à la centrale hydraulique, est représenté. Ainsi, dans l'exemple, le moteur 735 est un moteur hydraulique. Il est avantageux que la centrale hydraulique 85 soit disposée en-dehors du volume V1, car cela permet que la centrale hydraulique ne soit pas exposée à l'activité radioactive importante régnant dans le volume V1 sous la forme de rayonnements ionisants et sous la forme de contaminations. De même, il est également avantageux que les vérins 751, 771, 791, 797, 811 et 831 et éventuellement le moteur 735 sont hydrauliques, car les mécanismes hydrauliques ne sont pas sensibles aux rayonnements ionisants, et donc moins susceptibles de subir des pannes, contrairement aux mécanismes électriques, tels que par exemple des vérins électriques. Ainsi, la durée de vie de la centrale hydraulique et des vérins sont améliorées, ce qui permet de fiabiliser le fonctionnement du bras robotisé 7. Il est également avantageux que les flexibles 86 s'étendent entre le mât 4 et le cylindre de guidage 3, car les flexibles s'étendent ainsi dans la même ouverture 15 que le cylindre de guidage 33 et que le mât 4, ce qui favorise le contrôle de l'étanchéité de l'enceinte 11, puisque les flexibles ne nécessitent pas la présence d'une autre ouverture dans l'enceinte. Avantageusement, le bouchon 39 est adapté pour permettre le passage des flexibles 86 sans rompre l'étanchéité de l'enceinte 11.

La course des vérins linéaires et le débattement angulaire des membres du bras robotisé 7 sont donnés, à titre d'exemple uniquement, dans les tables 1 et 2 ci-dessous :

**[Table 1] La table 1 liste la course des actionneurs linéaires du bras robotisé 7.**

| | | | | | |
|---|---|---|---|---|---|
| Référence vérin | L751 | L771 | L791 | L797 | L811 |
| Course utile | 650 mm | 750 mm | 550 mm | 650 mm | 550 mm |

**[Table 2] La table 2 liste le débattement des membres du bras robotisé 7.**

| | | | | |
|---|---|---|---|---|
| Référence débattement | α75 | α77 | α79 | α81 |
| Débattement maximal | 68° | 74° | 85° | 105° |

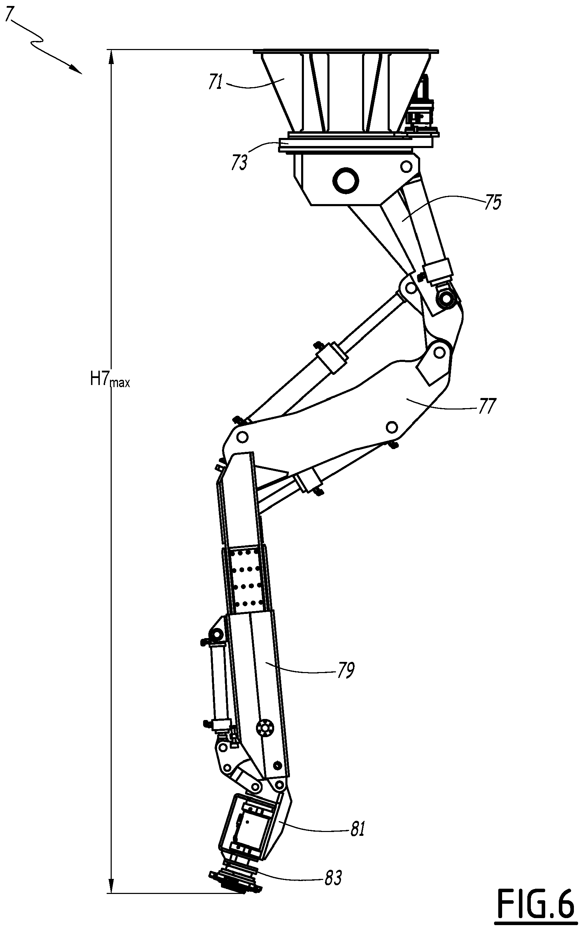

Le bras robotisé 7 est particulièrement avantageux, cas ses sept degrés de liberté lui permettent d'occuper de multiples configurations différentes, ce qui confère une très grande mobilité à l'outil 6. Par exemple, sur les figures 2 à 5, le bras robotisé 7 est représenté dans une configuration repliée, particulièrement compacte à la fois horizontalement et verticalement. Sur les figures 6 à 8, le bras robotisé est représenté dans une configuration dépliée, qui donne au bras robotisé une allonge particulièrement importante vers le bas. Sur les figures 1 et 9, le bras robotisé est représenté dans une configuration d'extension, qui permet à l'outil 6 porté par le bras robotisé d'atteindre des objets particulièrement éloignés du mât 4, horizontalement.

On appelle « H7 » l'encombrement vertical du bras robotisé 7, c'est-à-dire la plus grande dimension verticale du bras robotisé, mesurée selon l'axe vertical Z entre le haut du socle 71 et le point le plus bas du bras robotisé.

On appelle « R7 » l'encombrement horizontal du bras robotisé, c'est-à-dire la plus grande dimension radiale du bras robotisée, mesurée dans un plan perpendiculaire à l'axe vertical Z entre l'axe vertical et le point du bras robotisé le plus éloigné de l'axe vertical.

En configuration repliée, le membre prolongateur 75, le membre principal 77 et le membre télescopique 79 sont rapprochés les uns des autres, de sorte à former un « Z », et le membre télescopique est rétracté. Cette configuration permet de minimiser l'encombrement vertical H7 et l'encombrement horizontal R7 du bras robotisé. On note alors « H7ₘᵢₙ » l'encombrement vertical minimal et « R7ₘᵢₙ » l'encombrement horizontal minimal du bras robotisé. En pratique, dans l'exemple, pour atteindre la configuration repliée, les vérins 751, 771, 791 et 797 sont complètement rétractés. Cette configuration repliée du bras robotisé 7 est particulièrement avantageuse pour diminuer simultanément son encombrement horizontal et son encombrement vertical.

De préférence, en configuration repliée, le membre d'extrémité 81 est remonté, de sorte à être au plus proche du membre principal 77. Pour cela, dans l'exemple, le vérin 811 est complètement déployé.

Dans l'exemple, en configuration repliée, l'encombrement H7ₘᵢₙ est compris entre 3000 mm et 5000 mm, de préférence égal à 4000 mm, et l'encombrement R7ₘᵢₙ est compris entre 950 mm et 1450 mm, de préférence égal à 1100mm.

En configuration dépliée, le membre prolongateur 75, le membre principal 77 et le membre télescopique 79 sont positionnés de sorte à maximiser la plus grande dimension verticale H7 du bras robotisé 7. On note alors « H7ₘₐₓ » l'encombrement vertical maximal du bras robotisé. En pratique, dans l'exemple, pour atteindre la configuration dépliée, le vérin 751 est complètement rétracté, les vérins 771 et 797 et 791 sont complètement déployés. Cette configuration dépliée est particulièrement avantageuse pour permettre à l'outil 6 d'atteindre des objets situés particulièrement loin de l'extrémité basse 43 du mât 4. Sur les figures 6 à 8, le vérin 811 est en outre montré complètement rétracté, mais la position du vérin 811 est en pratique adaptée à l'orientation en pivotement souhaitée pour l'outil 6.

En pratique, en configuration dépliée, l'encombrement vertical H7ₘₐₓ du bras robotisé 7 correspond à l'allonge verticale du bras robotisé, c'est-à-dire la distance verticale à laquelle l'outil 6 est situé du socle 71, et donc la distance verticale maximale de travail de l'outil. La présence du membre télescopique 79 est particulièrement avantageuse pour augmenter l'allonge verticale du bras robotisé, sans augmenter son encombrement en configuration repliée.

Dans l'exemple, en configuration dépliée, l'encombrement H7ₘₐₓ est compris entre 7000 mm et 9000 mm, de préférence égal à 8200 mm. De plus, en configuration dépliée, le bras robotisé 7 est capable de supporter une masse d'environ 1700 kg, correspondant en pratique à somme de la masse de l'outil 6 et de la masse de la charge portée par l'outil.

En configuration d'extension, le membre prolongateur 75, le membre principal 77 et le membre télescopique 79 sont positionnés de sorte à maximiser la plus grande dimension horizontale R7ₘₐₓ du bras robotisé 7 tout en permettant à l'outil 6 de porter une charge importante. En pratique, dans l'exemple, pour atteindre la configuration d'extension, et les vérins 751, 771 et 791 sont dans une position intermédiaire entre leur position rétractée et leur position déployée. La position intermédiaire des vérins 751, 771 et 791 est déterminée de sorte à maximiser simultanément la masse pouvant être supportée par le bras robotisé et la plus grande dimension horizontale R7ₘₐₓ. Dans l'exemple des figures 1 et 9, le membre télescopique 79 est en outre rétracté, c'est-à-dire que le vérin 797 est complètement rétracté. Dans cette configuration, l'encombrement R7ₘₐₓ est compris entre 4500 mm et 6500 mm, de préférence égal à 5500 mm. Par ailleurs, un même encombrement R7ₘₐₓ du bras robotisé 7 peut être obtenu avec le membre télescopique 79 partiellement ou complètement déployé, et avec les vérins 751, 771 et 791 dans d'autres positions intermédiaires entre leur position rétractée et leur position déployée que celles représentées à la figure 9.

En pratique, en configuration d'extension, l'encombrement horizontal R7ₘₐₓ du bras robotisé 7 correspond à l'allonge horizontale du bras robotisé, c'est-à-dire la distance horizontale à laquelle l'outil 6 est situé de l'axe vertical 7, et donc la distance horizontale maximale de travail de l'outil.

De plus, en configuration d'extension, le bras robotisé 7 est capable de supporter une masse d'environ 700 kg, correspondant en pratique à la somme de la masse de l'outil 6 et de la masse de la charge portée par l'outil.

Par ailleurs, dans une configuration intermédiaire non représentée sur les figures, le bras robotisé 7 est capable de supporter une masse d'environ 1700 kg à une distance de 5000 mm, c'est-à-dire pour en encombrement horizontal R7 du bras robotisé égal à 5000 mm. Le bras robotisé 7 est donc en mesure de supporter des charges élevées à des distances importantes, ce qui le rend particulièrement adapté pour réaliser des opérations de démantèlement d'installation nucléaire.

Les configurations repliée, dépliée, d'extension ainsi que la configuration intermédiaire non représentée sont des configurations dans lesquelles le bras robotisé 7 est en mesure de supporter une masse particulièrement élevée, c'est-à-dire des configurations dans lesquelles le bras robotisé est en mesure d'effectuer des tâches de manutention. Autrement dit, dans ces configurations, ainsi que dans toute configuration intermédiaire entre deux de ces configurations, le bras robotisé 7 est en condition de manutention. De manière particulièrement avantageuse, le bras robotisé 7 est capable de supporter une masse d'au moins 700 kg quelle que soit sa configuration, lorsqu'il est en condition de manutention. Le bras robotisé 7 est donc en mesure de supporter des charges importantes dans de multiples configurations.

Par ailleurs, à partir de la configuration d'extension représentée à la figure 9 et en déployant le membre télescopique 79, c'est-à-dire en déployant complètement le vérin 797, l'encombrement R7 serait augmenté de 1000 mm et la masse pouvant être supportée par le bras robotisée 7 serait diminuée jusqu'à 30 kg. Cette configuration de déploiement maximale conduit le bras robotisé 7 à ne pas pouvoir supporter de charge importante, et ne permet alors pas au bras robotisé 7 d'être en condition de manutention, mais permet néanmoins au bras robotisé 7 d'effectuer certaines tâches nécessaires au démantèlement de l'installation nucléaire 1, comme par exemple des travaux de découpage sans manutention lourde, qui nécessitent une allonge particulièrement importante tout en portant un outil de masse faible.

L'allonge et la masse pouvant être supportée par le bras robotisé sont donc particulièrement adaptables, en fonction des contraintes de fonctionnement rencontrées par le bras robotisé au cours des opérations de démantèlement de l'installation nucléaire 1.

Le bras robotisé 7 est ainsi en mesure d'adapter son encombrement vertical et son encombrement horizontal de manière importante, selon les conditions requises par les opérations de démantèlement effectuées. Ainsi, l'encombrement vertical maximal H7ₘₐₓ du bras robotisé 7, atteint en configuration dépliée, est supérieur ou égal à deux fois l'encombrement vertical minimal H7ₘᵢₙ du bras robotisé, atteint en configuration repliée. Dans l'exemple, l'encombrement vertical maximal H7ₘₐₓ est égal à 2,05 fois l'encombrement vertical minimal H7ₘᵢₙ.

En outre, l'encombrement horizontal maximal R7ₘₐₓ du bras robotisé 7, atteint en configuration d'extension, est supérieur ou égal à deux fois l'encombrement horizontal minimal du bras robotisé, atteint en configuration repliée. Dans l'exemple, l'encombrement horizontal maximal est égal à 4,7 fois l'encombrement horizontal minimal. Cela est particulièrement avantageux, car cela permet à l'outil 6 fixé au bras robotisé de porter des charges lourdes et de bénéficier d'une allonge horizontale et verticale particulièrement importante, tout en conservant une configuration repliée du bras robotisé qui présente les avantages suivants :
- L'encombrement horizontal R7ₘᵢₙ en configuration repliée est inférieur à la moitié du diamètre D33, c'est-à-dire inférieur au rayon du cylindre de guidage 33. Ainsi, le bras robotisé 7 est suffisamment compact pour pouvoir être reçu dans le cylindre de guidage, ce qui est particulièrement utile pour mettre en place le bras robotisé dans l'enceinte 11 au travers du cylindre de guidage, ou ressortir de bras robotisé de l'enceinte 11, notamment lorsque le mât 4 est mis en place ou démonté, par exemple à l'aide du système de manutention 5.
- L'encombrement vertical H7ₘᵢₙ en configuration repliée est particulièrement faible, ce qui permet au bras robotisé d'être mis en place dans une installation nucléaire 1 peu spacieuse. Par exemple, lorsque l'installation nucléaire 1 est une centrale nucléaire UNGG et que l'enceinte 11 est l'enceinte du réacteur, alors au début du démantèlement de l'installation nucléaire 1, l'espace disponible entre les premiers éléments à démanteler et l'extrémité basse 43 du mât 4 est particulièrement faible, généralement de l'ordre de 4 à 5 mètres. Ainsi, pour pouvoir être mis en place dans l'enceinte 11, il est nécessaire que le bras robotisé soit particulièrement compact. En outre, de tels réacteurs ont généralement une profondeur importante, de l'ordre de 25 mètres, et un diamètre horizontal important, de l'ordre de 18 mètres, ce qui nécessite un bras robotisé capable de se déployer sur une grande hauteur et bénéficiant d'une allonge importante, afin de pouvoir intervenir partout dans l'enceinte 11. Dans l'exemple, les capacités de déploiement vertical du bras robotisé sont en outre augmentés par l'aspect modulaire du mât 4, dont la hauteur H4 peut être adaptée.

La conception du bras robotisé 7 à sept degrés de liberté, spécifique et particulièrement adaptée au démantèlement d'installations nucléaires, permet simultanément d'obtenir un bras robotisé très compact et capable de s'étendre sur de grandes distances, horizontalement et verticalement. Ces avantages proviennent notamment de l'utilisation combinée de quatre membres pivotants entre eux, à savoir les membres prolongateur 75, principal 77, télescopique 79 et d'extrémité 81, ce qui permet de donner au bras robotisé une forme en « Z » lorsqu'il est en configuration repliée, et d'un membre télescopique, ce qui permet d'augmenter l'allonge du bras robotisé. En outre, l'utilisation de la couronne d'orientation 73 et de la tête rotative 83 permet simultanément d'adapter l'orientation du bras robotisé 7 et de l'outil 6, ce qui permet de s'adapter à tous les besoins d'orientation pouvant être rencontrés au cours du démantèlement de l'installation nucléaire 1.

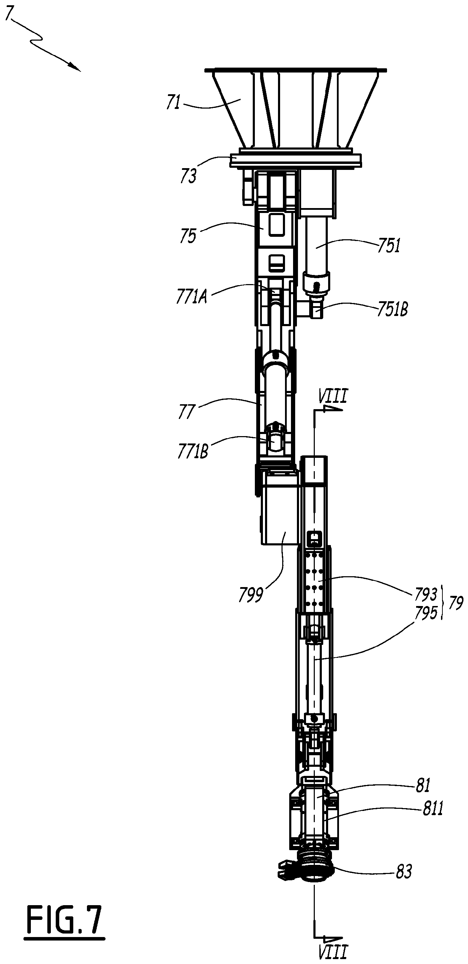

Par ailleurs, et comme mieux visible à la figure 7, pour faciliter le repliement du bras robotisé 7 en configuration repliée et l'obtention d'une forme en « Z », le membre télescopique 79 et le membre d'extrémité 81 sont décalés, selon l'axe de pivotement X79, du membre prolongateur 75 et du membre principal 77. En d'autres termes, le membre télescopique et le membre d'extrémité sont alignés entre eux selon l'axe X79, le membre prolongateur et le membre principal sont alignés entre eux selon l'axe X79, et le membre télescopique est décalé du membre principal selon l'axe X79 au niveau de la liaison entre le membre télescopique et le membre principal. Pour obtenir ce décalage, le membre télescopique 79 comprend une pièce de fixation 799, fixée à la partie intérieure 793 en étant décalée de la partie intérieure 793 selon l'axe X79, et à laquelle la deuxième extrémité 791B du vérin 791 est fixée. Ainsi, le vérin 791 est aligné avec le membre principal 77, mais décalé du membre télescopique. Ce décalage permet au membre télescopique 79 de pivoter sur le côté de membre principal 77, sans entrer en collision avec le membre principal. Cette conception est en pratique plus compact qu'une conception dans laquelle le membre télescopique serait aligné avec le membre principal.

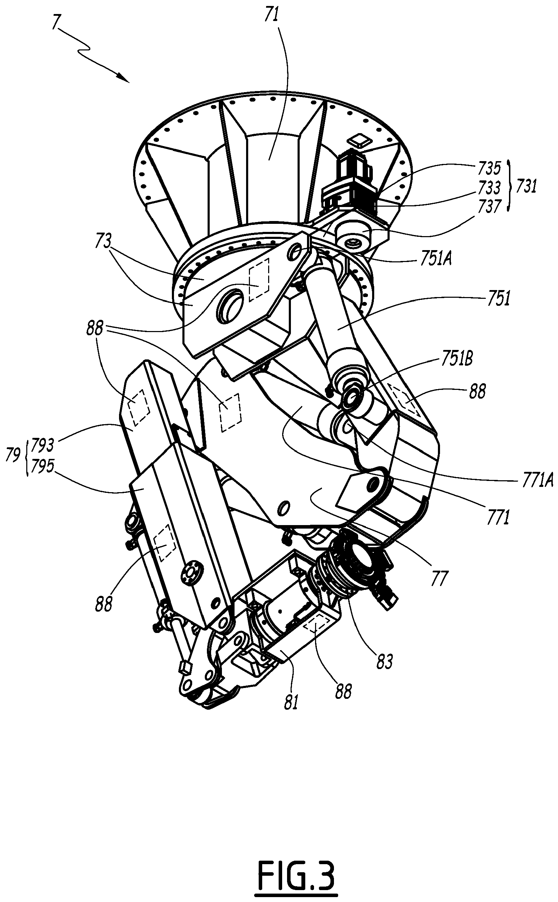

De même, le vérin 751 est décalé, selon l'axe X75, du membre prolongateur 75, ce qui permet de réduire l'encombrement du bras robotisé 7 en configuration repliée, en permettant au vérin 771 du membre principal 77 de se loger dans le membre prolongateur 75, comme mieux visible aux figures 2 et 3.

Compte-tenu de l'ambiance radioactive régnant dans l'enceinte 11, le bras robotisé 7 est avantageusement contrôlé à distance, depuis l'extérieur de l'enceinte 11. En pratique, le bras robotisé est soit contrôlé manuellement par un opérateur, au travers d'une Interface Homme-Machine (IHM), comme par exemple à l'aide de manettes de contrôle, soit automatiquement, comme par exemple par un logiciel. Dans les deux cas, il n'est pas possible de contrôler visuellement la position du mât 7, car l'enceinte 11 est fermée de manière étanche. Ainsi, pour connaître avec précision la position du bras robotisé 7 au sein de l'enceinte 11, le bras robotisé comprend un ensemble de capteurs 88, représentés de manière schématique sur les figures.

En pratique, la couronne d'orientation 73, les membres 75, 77, 79 et 81 et la tête rotative 83 embarquent chacun des capteurs 88, qui sont des capteurs permettant de détecter la position du bras robotisé 7, et permettant de détecter une collision entre le bras robotisé et son environnement avant qu'elle ne se produise, de sorte à l'éviter. Ces capteurs sont par exemple des capteurs de position linéaire ou angulaire, des capteurs de vitesse, d'accélération, des capteurs tels que capteurs de vision, des scanners 3D, ou encore des capteurs de température, de pression, ou de mesure de radiation. Ces capteurs fournissent, de préférence, des données en temps réel. Les capteurs 88 sont par exemple posés en applique sur la couronne d'orientation, les membres et la tête rotative. Les capteurs 88 sont représentés uniquement à la figure 3, de manière schématique. Ainsi, lorsque le bras robotisé est en mouvement, de nombreux paramètres de fonctionnement de la couronne d'orientation 73, des membres 75, 77, 79 et 81 et de la tête rotative 83 sont connues avec précision. Les données provenant de l'ensemble des capteurs 88 sont analysées afin d'établir avec précision l'état complet du bras robotisé 7. La complémentarité des mesures provenant des différents capteurs, et notamment des capteurs de position, de vitesse et d'accélération, permet de recouper les données de position du bras robotisé 7, et ainsi de connaître avec une précision accrue sa position réelle, de préférence en temps réel, et éventuellement de récolter des informations sur l'environnement du bras robotisé 7.

De préférence, les données provenant des capteurs 88 sont analysées par des cartes électroniques 89, représentées uniquement à la figure 1 de manière schématique. Avantageusement, les cartes électroniques 89 sont déportées du bras robotisé 7 de sorte à être située à l'extérieur de l'enceinte étanche 11. Dans l'exemple, les cartes électroniques 89 sont fixées à la partie fixe 3 du système de démantèlement 2. Ainsi, les cartes électroniques 89 ne sont pas soumises aux rayonnements ionisants présents dans l'enceinte étanche 11, qui pourraient, dans le cas contraire, compromettre leur fonctionnement et entraîner des défaillances. Le fonctionnement des capteurs 88 est ainsi fiabilisé, ce qui permet de réduire les risques de perte d'informations concernant la position du bras robotisé 7.

Par ailleurs, les données analysées par les cartes électroniques 89 sont utilisées pour corriger les commandes envoyées à la centrale hydraulique 85 contrôlant les vérins et au moteur 735, de sorte que la position commandée du bras robotisé 7 soit en permanence contrôlée avec précision et en tenant compte de la position réelle du bras robotisé, et de sorte à éviter une collision entre le bras robotisé et son environnement. Par exemple, lorsque les capteurs 88 détectent qu'une partie du bras robotisé 7, comme la tête rotative 83, suit une trajectoire pouvant conduire à une collision, comme par exemple avec un empilement 13 ou avec l'enceinte 11, alors les données analysées par les cartes électroniques 89 permettent de corriger les commandes envoyées à la centrale hydraulique 85 de sorte à éviter cette collision.

Les capteurs 88 permettent également d'éviter à certains membres du bras robotisé 7 d'entrer en collision avec d'autres parties du bras robotisé, notamment lorsque le bras robotisé est en configuration repliée. En effet, dans cette configuration, la grande compacité du bras robotisé 7 entraîne le fait que certains pivotements des membres 75, 77, 79 et 81 pourraient entraîner leur collision avec d'autres parties du bras robotisé. Par exemple, le membre principal 77 pourrait entrer en collision avec le socle 71 si le membre prolongateur 75 était pivoté en déployant le vérin 751. La présence des capteurs 88 permet de détecter l'imminence d'une telle collision avant qu'elle ne survienne, et l'analyse réalisée par les cartes électroniques 89 des données provenant des capteurs permet de corriger le déplacement du bras robotisé 7 pour éviter une telle collision.

Avantageusement, le système de démantèlement 2 comprend également une ou plusieurs caméras 90 disposées par exemple sur le socle 71 et/ou sur la tête rotative 83. Les caméras 90 permettent de surveiller les opérations de démantèlement réalisées par le bras robotisé 7 et l'outil 6. Les caméras 90 permettent également de repérer la position des empilements 13 de briques de graphite à l'intérieur de l'enceinte 11, ainsi que la position relative du bras robotisé et de l'outil par rapport aux empilements, ce qui permet de fournir des données permettant d'adapter les commandes des vérins 751, 771, 791, 797, 811 et 831 et du moteur 735 contrôlant la position du bras robotisé 7 dans l'enceinte 11. Positionner une caméra 90 sur la tête rotative 83 est particulièrement avantageux, car cela permet de contrôler avec précision les opérations réalisées par l'outil 6 et la position des empilements 13. Les caméras 90 sont représentées uniquement sur la figure 2, de manière schématique.

Avantageusement, lorsque le bras robotisé 7 est contrôlé automatiquement, les images produites par les caméras 90 sont analysées, par exemple par les cartes électroniques 89, ou par des logiciels, afin de reconnaître automatiquement la position des éléments devant être manipulés par le bras robotisé 7, c'est-à-dire, dans l'exemple, des empilements 13 de brique de graphite, ainsi que la position relative du bras robotisé 7 et de l'outil 6 par rapport aux éléments à manipuler.

Cette analyse des images des caméras 90 par les cartes électroniques 89 est, de préférence, basée au moins sur une reconnaissance de forme et de dimensions, cette reconnaissance s'appuyant de préférence sur des capteurs d'image incorporés dans les caméras 90. En outre, sur la base de cette analyse, et sur la base de la connaissance de la position et des mouvements du bras robotisé 7 issue de l'analyse des données des capteurs 88, les cartes électroniques 89 ou les logiciels sont en mesure de déterminer les mouvements et la trajectoire optimaux du bras robotisé. Avantageusement, sur la base de ces informations, et particulièrement sur la base de la forme et des dimensions des éléments observés par les caméras 90, les cartes électroniques 89 ou les logiciels sont également en mesure de décider automatiquement d'un changement d'outil si le changeur d'outils de la tête rotative 83 dispose, parmi le groupe d'outils disponibles, d'un outil plus adapté aux besoins que celui fixé au bout du bras robotisé, par exemple un outil plus adapté pour manipuler les éléments à manipuler. Alternativement, la décision d'un changement d'outil est effectuée par un opérateur situé hors de l'enceinte 11, sur la base de données fournies par les cartes électroniques 89 ou les logiciels.

La reconnaissance de forme réalisée par les cartes électroniques 89 ou les logiciels s'effectue de préférence sur l'analyse d'images produites par un algorithme de détection de contours, ces images étant par exemple des images en noir et blanc dans lesquelles les contours des objets se trouvant dans le cadre de l'image apparaissent en blanc, alors que les surfaces sans contours apparaissent en noir. En outre, la reconnaissance de forme peut avantageusement s'effectuer sur certaines zones prédéfinies de l'image.

Grâce à cette analyse des images des caméras 90, l'automatisation du contrôle du bras robotisé 7 est particulièrement fiable, car la connaissance de la position du bras robotisé 7 et le choix des mouvements effectués par le bras robotisé s'effectue à la fois sur la base des données issues des capteurs 88 et sur la base des images produites par les caméras 90. Les données issues des capteurs 88 et les images produites par les caméras 90 sont ainsi complémentaires pour permettre un contrôle automatique précis et fiable du bras robotisé 7. Le fonctionnement du système de démantèlement 2 est ainsi amélioré.

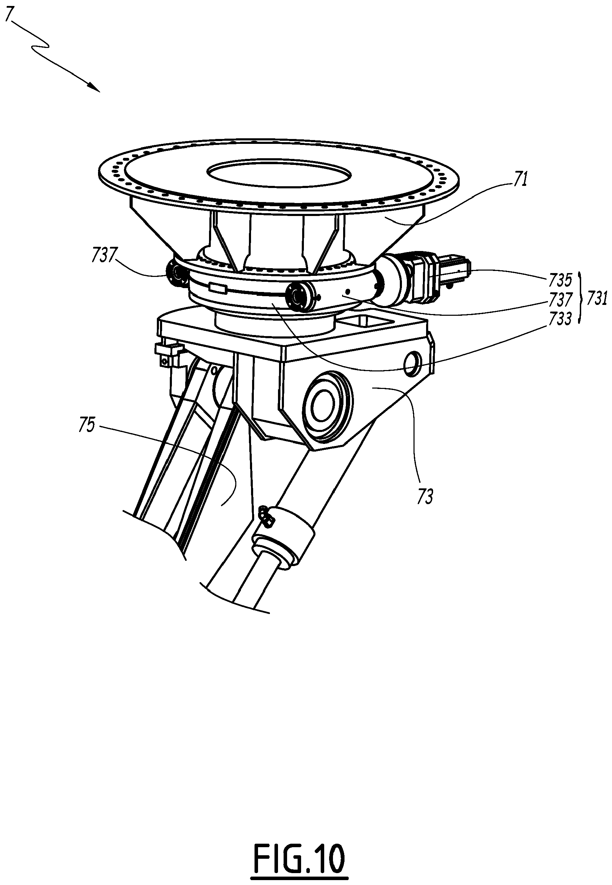

On décrit à présent un deuxième mode de réalisation du système de démantèlement 2, en référence à la figure 10. Dans le deuxième mode de réalisation, les éléments analogues à ceux du premier mode de réalisation portent les mêmes références et fonctionnent de la même façon. Si une référence est utilisée dans la description du deuxième mode de réalisation sans être reproduite sur la figure correspondante, elle correspond à la partie ou pièce portant la même référence dans le premier mode de réalisation. Dans ce qui suit, on décrit principalement les différences entre le deuxième mode de réalisation et le premier mode de réalisation.

Dans le deuxième mode de réalisation du système de démantèlement 2, seul le bras robotisé 7 diffère avec le premier mode de réalisation. Ici, le système d'entraînement 731 comprend une roue dentée 733, identique à la roue dentée du premier mode de réalisation, et deux actionneurs 735 comprenant chacun un élément d'engrainement 737. Les actionneurs 735 sont par exemple des moteurs hydrauliques ou électriques, ou des vérins hydrauliques rotatifs. À la figure 10, l'un des deux actionneurs 735 est masqué par le socle 71, et seul son élément d'engrainement 737 est visible. Les éléments d'engrainement 737 sont ici des vis sans fin, dont les rotations sont commandées par les actionneurs 735, et qui entraînent la rotation de la roue dentée 733. En pratique, les vis sans fin s'étendent selon un axe perpendiculaire à l'axe de rotation Z73 de la couronne d'orientation 73. Un avantage du deuxième mode de réalisation est de permettre la réduction de l'encombrement vertical du socle 71. En effet, les actionneurs 735 s'étendent dans le prolongement des vis sans fin 737, c'est-à-dire perpendiculairement à l'axe vertical Z, et leur encombrement vertical est plus faible que les actionneurs 735 du premier mode de réalisation, qui s'étendent selon l'axe vertical Z et qui nécessitent donc que le socle 71 soit suffisamment haut pour pouvoir les accueillir. Ainsi, dans le deuxième mode de réalisation, le socle 71 est moins haut que dans le premier mode de réalisation, ce qui permet de réduire l'encombrement vertical minimal H7min du bras robotisé 7. Dans l'exemple, l'encombrement est réduit d'environ 200 mm, par rapport au premier mode de réalisation. En variante du deuxième mode de réalisation, le système d'entraînement 731 comprend un seul actionneur 735 et donc un seul élément d'engrainement 737.

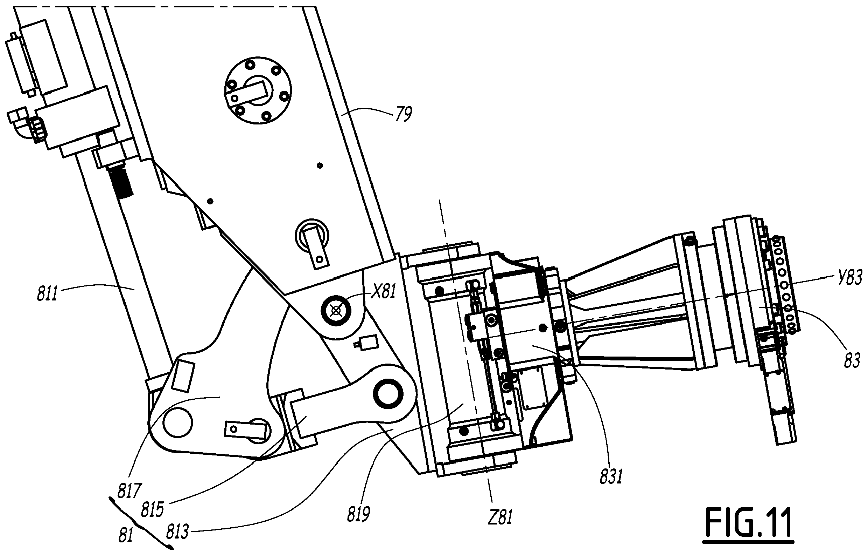

On décrit à présent un troisième mode de réalisation du système de démantèlement 2, en référence à la figure 11. Dans le troisième mode de réalisation, les éléments analogues à ceux des premier et deuxième modes de réalisation portent les mêmes références et fonctionnent de la même façon. Si une référence est utilisée dans la description du troisième mode de réalisation sans être reproduite sur la figure correspondante, elle correspond à la partie ou pièce portant la même référence dans les premier ou deuxième mode de réalisation. Dans ce qui suit, on décrit principalement les différences entre le troisième mode de réalisation et les premier et deuxième modes de réalisation.

Dans le troisième mode de réalisation du système de démantèlement 2, seul le bras robotisé 7 diffère avec le premier mode de réalisation. Ici, le bras robotisé 7 est à huit degrés de liberté. Dans l'exemple, pour former ce huitième degré de liberté, le membre d'extrémité 81 comprend en outre un actionneur rotatif 819. L'actionneur rotatif 819 est, dans l'exemple, un vérin hydraulique rotatif. Ici, le vérin rotatif 819 est disposé entre la portion d'extrémité 813 du membre d'extrémité et le vérin rotatif 831 entraînant en rotation la tête rotative 83. La rotation du vérin 819 entraîne la rotation du vérin 831 et de la tête rotative 83 par rapport à la portion d'extrémité 813 autour d'un axe de rotation Z81 orthogonal avec l'axe de pivotement X81 et avec l'axe de tête Y83. En d'autres termes, l'axe de rotation Z81 appartient à un plan contenant l'axe vertical Z

Le huitième degré de liberté formé par le vérin rotatif 819 est particulièrement avantageux pour améliorer la mobilité du bras robotisé 7, car il permet à l'outil 6 fixé à la tête rotative 83 de prendre une orientation dans laquelle l'axe de tête Y83 n'appartient pas à un plan contenant l'axe vertical Z. En d'autres termes, grâce au huitième degré de liberté, l'outil 6 est apte à travailler sur des éléments ne faisant pas face au mât 4 et au bras robotisé 7, c'est-à-dire appartenant à un plan ne contenant pas l'axe vertical Z. Le périmètre d'action du bras robotisé 7 et de l'outil 6 est ainsi étendu à des éléments décalés, notamment angulairement, du mât 4, ce qui améliore la mobilité du bras robotisé et les performances du système de démantèlement 2. L'axe de rotation Z81 est ainsi qualifié d'axe de décalage, et le vérin rotatif 819 de vérin rotatif de décalage.

En variante du troisième mode de réalisation, le vérin rotatif de décalage permettant d'obtenir le huitième degré de liberté du bras robotisé 7 n'appartient pas au membre d'extrémité 81, mais appartient à l'un des autres membres 75, 77 ou 79. Par exemple, le vérin rotatif appartient au membre télescopique 79 et est disposé entre la partie extérieure 795 du membre télescopique et le membre d'extrémité 81. Quel que soit le positionnement du vérin rotatif de décalage, l'axe de décalage est orthogonal avec les axes de pivotement X75, X77, X79 et X81. En outre, et quelle que soit la position du bras robotisé 7, l'axe de décalage appartient à un plan contenant l'axe vertical Z.

En variante du troisième mode de réalisation, le huitième degré de liberté n'est pas obtenu avec un vérin rotatif, mais avec un mouvement de pivotement de l'un des membres 75, 77, 79, 81 ou d'un membre supplémentaire, autour d'un axe de pivotement orthogonal aux axes de pivotement X75, X77, X79, X81.

En variante, le huitième degré de liberté du bras robotisé 7 est obtenu par d'autres moyens qu'un vérin rotatif de décalage. Par exemple, le bras robotisé 7 comprend un membre supplémentaire, mobile en rotation autour d'un axe de pivotement parallèle aux axes de pivotement X75, X77, X79 et X81, ou bien mobile en translation, comme le membre télescopique 79. Alternativement pour former ce huitième degré de liberté, l'un des quatre membres 75, 77, 79 et 81 du bras robotisé 7 est en outre mobile en rotation de sorte à pouvoir pivoter en roulis, de manière similaire à la tête rotative 83, ou bien l'un des membres prolongateur 75, principal 77 ou d'extrémité 81 est en outre mobile en translation, de manière similaire au membre télescopique 79.

En variante non-représentée de l'invention, le bras robotisé 7 est à plus de huit degrés de liberté, par exemple à neuf degrés de liberté. Pour atteindre neuf degrés de liberté, ou plus, le bras robotisé comprend par exemple un ou plusieurs membres supplémentaires pouvant être mobiles en pivotement et/ou en translation.

En variante, le mât 4 n'est pas modulaire, mais de hauteur H4 fixe.

En variante, le système de démantèlement 2 ne comprend pas de système de manutention 5. Dans une telle variante, la montée et la descente du mât 4, et donc du bras robotisé 7 qui y est fixé, s'effectuent par exemple à l'aide de moyens de levage distincts du système de démantèlement, comme par exemple un pont roulant ou une grue.

En variante, le système de démantèlement 2 ne comprend pas de mât 4 distinct de la partie fixe 3. Dans une telle variante, la partie fixe 3 comprend par exemple une base 31 et un mât fixé à la base.

En variante, le système de démantèlement 2 repose sur une plateforme tournante qui repose elle-même sur l'enceinte 11. Ainsi, la partie fixe 3 ne repose pas directement sur l'enceinte 11, mais est reliée à l'enceinte 11 par l'intermédiaire de la plateforme tournante. Une telle plateforme tournante est mobile en rotation par rapport à l'enceinte 11 autour d'un axe vertical parallèle à l'axe vertical Z, et non-confondu avec l'axe vertical Z. Ainsi, la rotation de la plateforme tournante entraîne le déplacement de la partie fixe 3, le long d'un arc-de-cercle, ce qui entraîne le déplacement du mât 4, du bras robotisé 7 et de l'outil 6. Une telle plateforme tournante est particulièrement avantageuse, car elle permet de déplacer l'ensemble du bras robotisé 7 au sein de l'enceinte 11, ce qui permet d'augmenter le périmètre d'action du bras robotisé 7, qui est alors supérieur à la plus grande dimension horizontale R7ₘₐₓ du bras robotisé.

En variante, l'ordre des membres prolongateur 75, principal 77, télescopique 79 et d'extrémité 81 est différent. Par exemple, le membre télescopique 79 est disposé entre le membre prolongateur et le membre principal.

En variante, le bras robotisé 7 comprend d'une part la couronne d'orientation 73 et la tête rotative 83 formant deux des sept degrés de liberté du bras robotisé, et d'autre part des membres différents des quatre membres 75, 77, 79 et 81 pour former les cinq autres degrés de liberté du bras robotisé. Par exemple, le bras robotisé 7 comprend un membre supplémentaire, disposé entre le membre 79 et le membre 81, qui est pivotant en tangage par rapport au membre 79, et le membre 79 n'est pas télescopique, c'est-à-dire qu'il n'est pas mobile en translation, mais uniquement pivotant en tangage par rapport au membre principal 77. Les cinq degrés de libertés formés par les membres du bras robotisé sont alors tous des degrés de liberté de pivotement.

En variante, la tête rotative 83 est mobile en rotation par rapport au membre d'extrémité 81 en étant pivotante en tangage, autour d'un axe orthogonal à l'axe de pivotement X81. En d'autres termes, dans une telle variante, la tête rotative ne tourne pas sur elle-même mais pivote par rapport au membre d'extrémité.

Toute caractéristique décrite pour un mode de réalisation ou une variante dans ce qui précède peut être mise en œuvre pour les autres modes de réalisation et variantes décrites précédemment, pour autant que techniquement faisable.

Une partie du projet ayant mené à la présente invention a reçu un financement du programme de recherche et de formation Euratom 2019-2020 dans le cadre de la convention de subvention n°945273.

## Revendications

1. Système de démantèlement (2) pour une installation nucléaire (1), comprenant :
- une partie fixe (3), configurée pour être reliée à l'installation nucléaire (1) ;
- un mât (4), comprenant une extrémité haute (41) et une extrémité basse (43), l'extrémité haute étant portée par la partie fixe, le mât s'étendant selon un axe vertical (Z) depuis la partie fixe vers le bas ;
- un bras robotisé (7), fixé à l'extrémité basse du mât ; et
- un outil (6), fixé au bras robotisé,
dans lequel le bras robotisé (7) est à au moins sept degrés de liberté et comprend :
- une couronne d'orientation (73), mobile en rotation par rapport au mât (4) autour de l'axe vertical (Z) et permettant une rotation du bras robotisé par rapport au mât, de sorte à former un des sept degrés de liberté ;
- des membres (75, 77, 79, 81), mobiles par rapport à la couronne d'orientation (73) et les uns par rapport aux autres, de sorte à former cinq des sept degrés de liberté, les membres comprenant un membre d'extrémité (81) ; et
- une tête rotative (83), montée sur le membre d'extrémité (81) et portant l'outil (6), la tête rotative étant mobile en rotation par rapport au membre d'extrémité autour d'un axe de tête (Y83), de sorte à former un des sept degrés de liberté,
et dans lequel, lorsque le bras robotisé (7) est en condition de manutention, le bras robotisé est conçu pour supporter une masse, portée par la tête rotative (83), d'au moins 700 kg.

2. Système de démantèlement (2) selon la revendication 1, dans lequel lesdits membres (75, 77, 79, 81) sont constitués de quatre membres, les quatre membres étant mobiles en pivotement par rapport à la couronne d'orientation (73) et les uns par rapport aux autres, autour d'axes de pivotement respectifs (X75, X77, X79, X81) qui sont orthogonaux à l'axe vertical (Z), les quatre membres comprenant un membre télescopique (79), distinct du membre d'extrémité (81) et également mobile en translation le long d'un axe de translation (Y79).

3. Système de démantèlement (2) selon la revendication 2, dans lequel le bras robotisé (7) comprend, dans l'ordre suivant, depuis le mât (4) jusqu'à l'outil (6) :
- un socle (71), fixé à l'extrémité basse (43) du mât ;
- la couronne d'orientation (73), mobile en rotation par rapport au socle autour de l'axe vertical (Z) ;
- parmi les quatre membres (75, 77, 79, 81), un membre prolongateur (75), mobile en pivotement par rapport à la couronne d'orientation autour d'un premier (X75) des axes de pivotement ;
- parmi les quatre membres (75, 77, 79, 81), un membre principal (77), mobile en pivotement par rapport au membre prolongateur autour d'un deuxième (X77) des axes de pivotement ;
- le membre télescopique (79), mobile en pivotement par rapport au membre principal autour d'un troisième (X79) des axes de pivotement et mobile en translation le long de l'axe de translation (Y79) ;
- le membre d'extrémité (81), mobile en pivotement par rapport au membre télescopique autour d'un quatrième (X81) des axes de pivotement ; et
- la tête rotative (83), mobile en rotation par rapport au membre d'extrémité autour de l'axe de tête (Y83).

4. Système de démantèlement (2) selon l'une des revendications 2 et 3, dans lequel les quatre membres (75, 77, 79, 81) sont actionnés en pivotement par des vérins hydrauliques linéaires à double effet (751, 771, 791, 811) et dans lequel le membre télescopique (79) est actionné en translation par un vérin hydraulique linéaire à double effet (797).

5. Système de démantèlement (2) selon la revendication 4, dans lequel le mât (4) est configuré pour s'étendre au travers d'une ouverture (15) ménagée dans une enceinte étanche (11) de l'installation nucléaire (1), dans lequel le bras robotisé (7) est configuré pour être situé dans un volume intérieur (V1) de l'enceinte étanche, et dans lequel les vérins hydrauliques linéaires à double effet (751, 771, 791, 797, 811) sont alimentés en huile par une centrale hydraulique (85) déportée du bras robotisé et configurée pour être située à l'extérieur de l'enceinte étanche.

6. Système de démantèlement (2) selon la revendication 5, dans lequel la tête rotative (83) est actionnée en rotation par un vérin hydraulique rotatif à double effet (831) et dans lequel le vérin hydraulique rotatif à double effet (831) est alimenté en huile par la centrale hydraulique (85).

7. Système de démantèlement (2) selon l'une des revendications 5 et 6, dans lequel chacun des membres (75, 77, 79, 81) et la tête rotative (83) embarquent des capteurs (88) configurés pour détecter la position du bras robotisé (7) en temps réel, et configurés pour éviter une éventuelle collision du bras robotisé avec son environnement, et dans lequel le système de démantèlement (2) comprend des cartes électroniques (89) configurées pour analyser les données provenant des capteurs (88) et déportées du bras robotisé, les cartes électroniques étant configurées pour être situées à l'extérieur de l'enceinte étanche (11).

8. Système de démantèlement (2) selon l'une des revendications 2 à 7, dans lequel le membre télescopique (79) comprend une partie intérieure (793) et une partie extérieure (795), la partie extérieure étant configurée pour coulisser autour de la partie intérieure, et dans lequel, lors de la translation du membre télescopique, la partie intérieure est fixe en translation le long de l'axe de translation (Y79) par rapport au mât (4) et la partie extérieure est mobile en translation le long de l'axe de translation par rapport au mât.

9. Système de démantèlement (2) selon l'une des revendications précédentes, dans lequel la couronne d'orientation (73) a un débattement illimité autour de l'axe vertical (Z) et dans lequel la tête rotative (83) a un débattement supérieur ou égal à 180° autour de l'axe de tête (Y83).

10. Système de démantèlement (2) selon l'une des revendications précédentes, dans lequel la couronne d'orientation (73) comprend une roue dentée (733), dans lequel le bras robotisé (7) comprend un actionneur (735), fixe par rapport au mât (4), l'actionneur comprenant un élément d'engrainement (737) configuré pour coopérer avec la roue dentée pour entraîner la rotation de la couronne d'orientation, et dans lequel, de préférence, l'élément d'engrainement (737) est un pignon ou une vis sans fin.

11. Système de démantèlement (2) selon l'une des revendications précédentes, dans lequel un encombrement vertical (H7ₘₐₓ) du bras robotisé (7) dans une configuration dépliée est supérieur ou égal à deux fois un encombrement vertical (H7ₘᵢₙ) du bras robotisé dans une configuration repliée, et dans lequel un encombrement horizontal (R7ₘₐₓ) du bras robotisé dans une configuration d'extension est supérieur ou égal à deux fois un encombrement horizontal (R7ₘᵢₙ) du bras robotisé dans la configuration repliée.

12. Système de démantèlement (2) selon la revendication 11, considérée en combinaison avec la revendication 3, dans lequel, lorsque le bras robotisé (7) est en configuration repliée, le membre prolongateur (75), le membre principal (77) et le membre télescopique (79) sont repliés les uns vers les autres de sorte à former un « Z », et le membre télescopique (79) est rétracté.

13. Système de démantèlement (2) selon l'une des revendications 11 et 12, dans lequel la partie fixe (3) comprend un cylindre de guidage (33) configuré pour centrer le mât (4) par rapport à la partie fixe, le cylindre de guidage étant de forme cylindrique et centré sur l'axe vertical (Z), et dans lequel, lorsque le bras robotisé (7) est dans la configuration repliée, l'encombrement horizontal (R7ₘᵢₙ) du bras robotisé est inférieur à la moitié d'un diamètre intérieur (D33) du cylindre de guidage.

14. Système de démantèlement (2) selon l'une quelconque des revendications précédentes, dans lequel le bras robotisé est à au moins huit degrés de liberté.

15. Système de démantèlement (2) selon l'une quelconque des revendications 2 à 8 considérée en combinaison avec la revendication 14, dans lequel le huitième degré de liberté du bras robotisé (7) est obtenu :
- par un membres (81) parmi les quatre membres (75, 77, 79, 81), qui est en outre mobile en rotation autour d'un axe de décalage (Z81) orthogonal aux axes de pivotement (X75, X77, X79, X81) des quatre membres, ou
- par un membre supplémentaire, mobile en rotation par rapport aux quatre membres (75, 77, 79, 81), autour d'un axe de décalage orthogonal aux axes de pivotement (X75, X77, X79, X81) des quatre membres.
